# EUROPÄISCHE PATENTANMELDUNG

(11) **EP 2 191 929 A1**
(43) Veröffentlichungstag der Anmeldung: **02.06.2010**
(21) Anmeldenummer: 09174272.6
(22) Anmeldetag: 28.10.2009
(51) Int. Cl.: B23K 37/04, B23K 7/00

(54) **Schneidtisch**

(30) Priorität: 29.10.2008 DE 202008014350 U
(71) Anmelder: Kemper, Gerd, 48691 Vreden (DE)
(72) Erfinder: Kemper, Gerd, 48691 Vreden (DE)
(74) Vertreter: Habbel, Ludwig

(57) **Zusammenfassung**

Die Erfindung betrifft einen Schneidtisch einer thermischen Schneideinrichtung, mit einem Boden, und mit einem Gehäuse, welches zwei Längswände aufweist, und mit einem Schieber, welcher zwischen den Längswänden vorgesehen und in Längsrichtung des Gehäuses verfahrbar ist, und welcher dem Boden anliegend während einer sogenannten Hinfahrt von einem Ausgangspunkt zu einem Endpunkt verfahrbar ist, und der während einer so genannten Rückfahrt ohne Bodenkontakt zum Ausgangspunkt verfahrbar ist, wobei der Schieber während der Rückfahrt höher angeordnet ist als bei der Hinfahrt, und der Boden aus einem Betonwerkstoff besteht.

## Beschreibung

Die Erfindung betrifft einen Schneidtisch nach dem Oberbegriff des Anspruchs 1.

Derartige Schneidtische dienen zum Brennschneiden von metallischen Gegenständen, üblicherweise Blechen. Die Bleche können eine Materialstärke von mehreren Zentimetern aufweisen. Sie liegen auf einer Tischfläche, die üblicherweise als Rost ausgebildet ist, auf, so dass durch die Zwischenräume des Rostes Kleinteile und Brennrückstände, wie Schlacke u. dgl., in das Gehäuse hineinfallen können. Diese herabfallenden Elemente werden regelmäßig von einem Schieber zusammengetragen. Dabei besteht das Problem, dass der Schneidtisch üblicherweise aus metallischen Elementen zusammengesetzt ist und auch der Boden als metallische Grundplatte des Gehäuses ausgestaltet ist. Dadurch ist nicht ausgeschlossen, dass schmelzflüssige Bestandteile, die auf den Boden auftreffen, am Boden ankleben können bzw. mit dem Boden regelrecht verschweißt werden. Trifft nun der Schieber auf derartig fest verbackene bzw. fest verschweißte Bestandteile, so kann dies zu erheblichen mechanischen Schlägen führen, die nicht nur die Mechanik des Schiebers und seiner Antriebs- und Führungsorgane belastet, sondern auch aufgrund von Vibrationen das Schneidergebnis negativ beeinflussen kann.

Bei den gattungsgemäßen Schneidtischen wird ein Umlauf des Schiebers in der Weise vorgesehen, dass der Schieber seine Hinfahrt oberhalb des Bodens durchführt und dabei auf dem Boden aufliegt, und dass er anschließend, vom Endpunkt an, in einer abgesenkten Stellung unterhalb des Bodens wieder zu seinem Ausgangspunkt zurückfährt.

Der Erfindung liegt die Aufgabe zugrunde, einen gattungsgemäßen Schneidtisch dahingehend zu verbessern, dass dieser bei möglichst wirtschaftlicher Ausgestaltung eine zuverlässige Reinigung des Bodens und möglichst optimale Schneidergebnisse gewährleistet.

Diese Aufgabe wird durch einen Schneidtisch mit den Merkmalen des Anspruchs 1 gelöst.

Die Erfindung schlägt mit anderen Worten vor, den Schieber überraschenderweise nicht unterhalb des Bodens zurückzufahren, sondern vielmehr in einer angehobenen Stellung, so dass gemäß dem vorliegenden Vorschlag die Hinfahrt in der abgesenkten Stellung und die Rückfahrt in einer angehobenen Stellung des Schiebers erfolgt. Dabei ist vorgesehen, den Boden des Schneidtisches aus einem Betonwerkstoff auszugestalten, so dass durch geeignete Wahl dieses Werkstoffs einerseits eine Beschädigung des Bodens selbst durch die herabfallenden Elemente ausgeschlossen ist und zweitens sichergestellt ist, dass aufgrund des verwendeten Werkstoffs eine Verschweißung bzw. ein Anbacken der herabfallenden Elemente mit dem Boden nicht erfolgen kann, so dass das Ablösen dieser Elemente vom Boden durch den Schieber vergleichsweise mühelos und insbesondere ohne die ansonsten nicht auszuschließenden mechanischen Belastungen insbesondere in Form von regelrechten Schlägen erfolgen kann. Hierdurch werden Vibrationen ausgeschlossen, die sich ansonsten auf das Schneidgut bzw. die thermische Schneideinrichtung übertragen könnten, so dass die Schneidqualität verbessert wird.

In besonders wirtschaftlicher Ausgestaltung kann vorgesehen sein, dass der Schneidtisch keinen eigenen Betonboden aufweist, sondern dass das Gehäuse rahmenartig ausgestaltet ist und unten offen ist. Mit dieser Öffnung steht es auf dem Untergrund auf, so dass auf die Ausgestaltung eines eigenen Gehäusebodens verzichtet werden kann. Hierdurch ist der Schneidtisch nicht nur leichter transportierbar und weist ein geringeres Gewicht auf, sondern er kann auch preisgünstiger ausgestaltet werden.

Insbesondere kann vorteilhaft vorgesehen sein, dass bei einem entsprechend geeigneten Hallenboden der Boden des Raumes, in dem der Schneidtisch aufgestellt werden soll, unmittelbar als Boden des Schneidtisches genutzt werden kann. Auf diese Weise kann die Erstellung eines eigenen Betonbodens für den Schneidtisch erübrigt werden, so dass hierdurch die Wirtschaftlichkeit des vorschlagsgemäßen Schneidtisches noch einmal erheblich verbessert werden kann.

Vorteilhaft kann vorgesehen sein, dass zu Gunsten einer möglichst wirtschaftlichen Betriebsweise des Schneidtisches eine Luftabsaugung sektional erfolgt, und zwar lediglich in dem Abschnitt, in dem momentan auch der thermische Trennvorgang durchgeführt wird. Dementsprechend kann vorteilhaft vorgesehen sein, dass das Gehäuse in Längsrichtung in mehrere Abteile aufgeteilt ist, die voneinander durch entsprechende Trennbleche abgetrennt sind, wobei diese einzelnen Abteile unabhängig voneinander be- bzw. entlüftet werden können. Hierzu weisen die Abteile jeweils Belüftungsanschlüsse auf. Bei den erwähnten Trennblechen ist vorgesehen, dass diese entweder pendelbeweglich aufgehängt sind oder aus einem verformbaren Werkstoff bestehen, oder dass sie zumindest bewegliche Abschnitte aufweisen, wobei die Beweglichkeit der Trennbleche derart gewählt ist, dass der Schieber bei seinen Hin- und Rückfahrten nicht behindert wird, sondern vielmehr die Trennbleche den Schieber ausweichen können.

Der Schieber ist vorteilhaft an den beiden Längsseiten des Gehäuses geführt. Somit können die Längsseiten des Gehäuses nicht nur als Stütze für das Auflagerost des Tisches genutzt werden und als Begrenzung der einzeln zu belüftenden Sektionen des Schneidtisches, sondern sie können auch die Antriebs-und / oder Führungselemente aufnehmen, welche den Schieber bei seinen Fahrten führen. Somit können diese Antriebs- bzw. Führungsorgane problemlos seitlich von den erwähnten Trennblechen angeordnet sein.

Der Schieber liegt bei seiner Hinfahrt auf dem Boden auf, um die Abreinigung des Bodens zu gewährleisten. Bei Erreichen des Endpunktes dieser Hinfahrt kann vorgesehen sein, dass der Schieber durch geeignete Führungselemente automatisch in eine demgegenüber angehobene Stellung bewegt wird, so dass er anschließend während seiner Rückfahrt vom Boden abgehoben ist. Auf diese Weise ist sichergestellt, dass der Schieber nicht in zwei Bewegungsrichtungen fördert, sondern lediglich während seiner Hinfahrt die Verunreinigungen fördert, so dass lediglich eine einzige Sammelkammer für derartige Verunreinigungen vorgesehen sein muss, die dann regelmäßig geleert werden kann, während an der gegenüberliegenden Seite des Schneidtisches keine derartige Sammelkammer vorgesehen sein muss, sondern hier vielmehr ausreichend Raum zur Verfügung stehen kann, um die Antriebsorgane und ggf. eine Steuerung des Schiebers unterzubringen.

Vorteilhaft kann eine derartige Steuerung besonders wirtschaftlich als einfache Zeitsteuerung ausgestaltet sein, so dass die Fahrten des Schiebers zeitabhängig ausgelöst werden. Je nach Menge der anfallenden Verunreinigungen, und dies ggf. in Abhängigkeit von den einzelnen Schneidprogrammen, Materialstärken u. dgl. kann vorgesehen sein, die Zeitintervalle durch den Benutzer des Schneidtisches einstellbar zu machen, so dass in Abhängigkeit von den jeweiligen Schneidbedingungen die Hinfahrten des Schiebers in wählbaren zeitlichen Abständen durchgeführt werden.

Ein Ausführungsbeispiel der Erfindung wird anhand der rein schematischen Darstellungen nachfolgend näher erläutert. Dabei zeigt
- Fig. 1: ausschnittsweise einen Schneidtisch, bei dem sich der Schieber in seiner Hinfahrt befindet, und
- Fig. 2: einen Ausschnitt von Fig. 1 in gegenüber Fig. 1 größerem Maßstab,
- Fig. 3: eine mit Fig. 1 vergleichbare Ansicht, wobei sich der Schieber jedoch auf seiner Rückfahrt befindet, und
- Fig. 4: einen Ausschnitt aus Fig. 3, in gegenüber Fig. 3 größerem Maßstab.

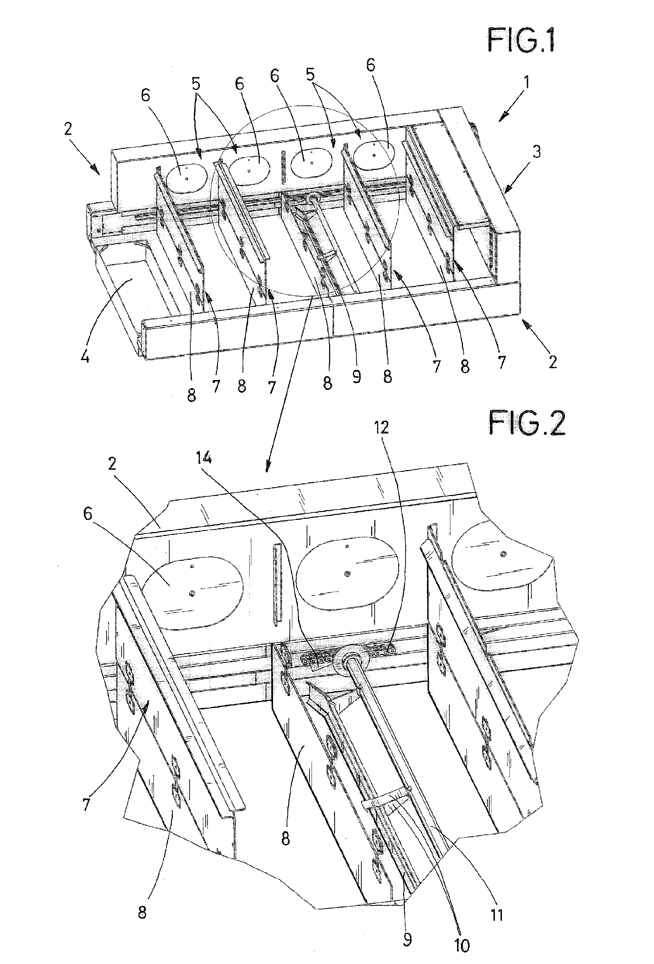

In Fig. 1 ist mit 1 insgesamt ein Schneidtisch bezeichnet, der allerdings lediglich ausschnittsweise dargestellt ist. Der Schneidtisch 1 weist zwei Längswände 2 auf sowie zwei Stirnwände 3. An dem links dargestellten Ende des Schneidtisches 1 ist die dort an sich vorgesehene Stirnwand nicht dargestellt, so dass ein Sammelbehälter 4 erkennbar ist, der unterhalb des Bodenniveaus, also in den Boden eingelassen, vorgesehen ist.

Der Schneidtisch 1 ist über seine Länge in mehrere Abteile 5 aufgeteilt, wobei jedes Abteil 5 eigene Belüftungsanschlüsse 6 aufweist, die durch Trennbleche 7 voneinander abgetrennt sind. Die Trennbleche weisen dabei einen unteren, beweglichen Abschnitt 8 auf, der jeweils als pendelbeweglich aufgehängte Klappe ausgestaltet ist. Von einem mittleren Trennblech 7 ist lediglich dieser untere, bewegliche Abschnitt 8 dargestellt, so dass die Sicht auf einen Schieber 9 freigegeben ist, der mittels mehrerer Ausleger 10 an einer Welle 11 gehalten ist. Die Welle 11 ist um ihre Längsachse schwenkbeweglich und im Übrigen in Längsrichtung des Schneidtisches 1 beweglich gelagert, wobei sie an einer Kette 12 befestigt ist, die in einer entsprechenden Führungsschiene innerhalb der Längswand 2 geführt ist und durch ein nicht dargestelltes Antriebsorgan angetrieben ist.
Aus Fig. 2 ist die Anordnung von Schieber 9, Auslegern 10, Welle 11 und Kette 12 näher ersichtlich, wobei unterhalb der Kette 12 ein Führungselement 14 erkennbar ist, welches etwa in einem ähnlichen Winkel nach unten weisend ausgerichtet ist wie die Ausleger 10. Es ist ersichtlich, dass sich der Schieber 9 bei seiner Hinfahrt so tief, nämlich auf dem Boden aufliegend, befindet, dass er aber auch die Welle 11 und die Ausleger 10 sich auf der Höhe befinden, in welcher die Trennbleche 7 ihre beweglichen Abschnitte 8 aufweisen, so dass diese beweglichen Abschnitte 8 dem Schieber 9 und der Welle 11 problemlos pendelnd ausweichen können.

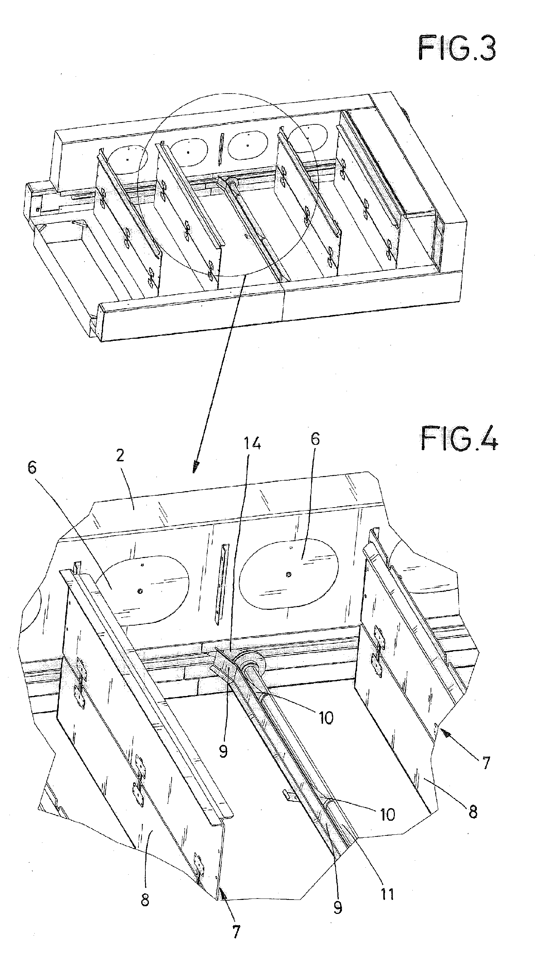

Aus den Fig. 3 und 4 ist die Darstellung desselben Schneidtisches 1 bei der Rückfahrt des Schiebers 9 ersichtlich. Auch in dieser angehobenen Stellung befindet sich der Schieber 9 so tief, dass er auf Höhe der beweglichen Abschnitte 8 der Trennbleche 7 verfährt. Dabei ist ersichtlich, dass das Führungselement 14 gemeinsam mit der Welle 11 verschwenkt worden ist und nun ähnlich wie die Ausleger 10 nach oben weisend ausgerichtet ist. Wenn der Schieber 9 bei seiner Hinfahrt den Endpunkt erreicht, werden die Führungselement 14 auf beiden Seiten der Welle 11 automatisch angehoben, so dass die Welle 11 geschwenkt wird und die Halter 10 mitsamt dem Schieber 9 für die Rückfahrt des Schiebers 9 angehoben werden.

## Patentansprüche

1. Schneidtisch einer thermischen Schneideinrichtung, mit einem Boden,
und mit einem Gehäuse, welches zwei Längswände aufweist,
und mit einem Schieber,
welcher zwischen den Längswänden vorgesehen und in Längsrichtung des Gehäuses verfahrbar ist,
und welcher dem Boden anliegend während einer sogenannten Hinfahrt von einem Ausgangspunkt zu einem Endpunkt verfahrbar ist,
und der während einer so genannten Rückfahrt ohne Bodenkontakt zum Ausgangspunkt verfahrbar ist,
**dadurch gekennzeichnet,**
**dass** der Schieber (9) während der Rückfahrt höher angeordnet ist als bei der Hinfahrt,
und **dass** der Boden aus einem Betonwerkstoff besteht.

2. Schneidtisch nach Anspruch 1,
**dadurch gekennzeichnet,**
**dass** das Gehäuse des Schneidtisches (1) rahmenartig ausgestaltet ist und unten offen auf dem Boden aufsteht.

3. Schneidtisch nach Anspruch 1 oder 2,
**dadurch gekennzeichnet,**
**dass** der Boden durch den Untergrund des Raumes gebildet ist, in welchem sich der Schneidtisch (1) befindet.

4. Schneidtisch nach einem der vorhergehenden Ansprüche,
**dadurch gekennzeichnet,**
**dass** das Gehäuse in Längsrichtung in mehrere Abteile (5) aufgeteilt ist, welche voneinander durch Trennbleche (7) abgetrennt sind,
wobei die Abteile (5) jeweils Belüftungsanschlüsse (6) zur Be- und / oder Entlüftung aufweisen,
und wobei die einzelnen Abteile unabhängig voneinander be- und / oder entlüftbar sind,
und wobei die Trennbleche (7) zumindest abschnittsweise beweglich ausgestaltet sind, derart, dass der bewegliche Abschnitt dem Schieber (9) bei dessen Fahrt auszuweichen vermag.

5. Schneidtisch nach einem der vorhergehenden Ansprüche,
**dadurch gekennzeichnet,**
**dass** der Schieber (9) an den beiden Längsseiten des Gehäuses geführt ist.

6. Schneidtisch nach Anspruch 5,
**gekennzeichnet durch**
Führungselemente (14), welche den Schieber (9) während seiner Rückfahrt automatisch in einer gegenüber dem Boden angehobenen Stellung halten.

7. Schneidtisch nach einem der vorhergehenden Ansprüche,
**gekennzeichnet durch**
eine Steuerung, welche die Fahrten des Schiebers steuert.

8. Schneidtisch nach Anspruch 6,
**dadurch gekennzeichnet,**
**dass** die Steuerung die Fahrten des Schiebers zeitabhängig steuert.
